# EUROPEAN PATENT SPECIFICATION

(11) **EP 2 799 778 B1**
(45) Date of publication and mention of the grant of the patent: **29.08.2018**
(21) Application number: 13194057.9
(22) Date of filing: 22.11.2013
(51) Int. Cl.: F24C 15/16, F24C 15/32

(54) **Cooking apparatus**
Kochvorrichtung
Appareil de cuisson

(30) Priority: 30.04.2013 KR 20130047946
(43) Date of publication of application: 05.11.2014
(73) Proprietor: Dongbu Daewoo Electronics Corporation, Seoul 100-031 (KR)
(72) Inventor: Kim, Han Ju, 422-040 Gyeonggi-do (KR)
(74) Representative: Michalski Hüttermann & Partner Patentanwälte mbB

(56) References cited:
- JP-A- 2008 190 824
- JP-A- 2010 266 106
- KR-A- 20090 064 501
- KR-A- 20100 081 245
- KR-A- 20110 058 135
- KR-A- 20110 082 805
- US-A1- 2009 188 915
- US-B1- 6 198 076

## Description

### CROSS-REFERENCES TO RELATED APPLICATIONS

The present application claims priority under to Korean Patent Application No. 10-2013-0047946 filed on April 30, 2013 in the Korean Intellectual Property Office.

### BACKGROUND

Exemplary embodiments of the present disclosure relate to a cooking apparatus, and more particularly, to a cooking apparatus which can carry out not only general cooking but also frying using hot air.

US 2009/188915 A1 refers to a heating cooker having a box-like cooking chamber for receiving an object to be cooked, and a hot air generator having an electric heater heat source and a blower. Hot air produced by the hot air generator is caused to impinge on the object as a high-speed jet flow from nozzle holes formed in a ceiling plate of the cooking chamber. The hot air after the impingement is sucked by the blower from hot-air suction openings formed in left and right sidewall lower sections of the cooking chamber and is returned for recirculation to the hot-air generator.

KR 2010 0081245 A refers to a convection microwave oven is provided to evenly supply air heated by the heater to the inside of a cavity, since a circulation fan assembly circulates the heated air flowing into the inside of the cavity. The convection microwave oven comprises a main body, a heat air circulation unit, a first heater, and a circulation fan assembly. The main body has a cavity with an intake hole and an exhaust hole. The heat air circulation unit discharges the air inside the cavity and through the exhaust hole and let air to flow inside the cavity through the intake hole. The first heater heats air before the inflow if the air to the inside of the cavity. The circulation fan assembly circulates the air flowing into the inside of the cavity.

In general, fried food is prepared by coating various foods such as fish, meat and vegetables with flour or frying powder and then frying the coated materials in oil.

Since oil used in frying may easily oxidize, it should be frequently exchanged with new oil. In this regard, since difficulties exist in keeping and reusing the oil once used in frying, the cooking cost may be likely to increase.

The background art of the present disclosure is disclosed in Korean Unexamined Utility Model Publication No. 1998-0044155 (published on September 25, 1998 and entitled "Continuous Automatic Food Fryer").

In the case of frying a cooking object using oil, since the oil is heated to a high temperature, the probability of a safety-related accident such as a burn increases. Also, in the case where it is necessary to defrost and fry a cooking object, defrosting and frying should be carried out in separate cooking containers, which may be cumbersome or inconvenient. Further, in frying, because heat is applied more to the outside than to the inside of the cooking object, the inside and the outside of the cooking object may not be evenly cooked. Therefore, a solution to these problems is desired.

### SUMMARY

One or more embodiments of the present invention relate to a cooking apparatus that can fry foods using the fat in the food (e.g., the cooking object), thereby preventing the occurrence of a safety-related accident due to oil having a high temperature.

One or more other embodiments of the present invention relate to a cooking apparatus which can simultaneously carry out defrosting and frying of a cooking object.

One or more further embodiments of the present invention relate to a cooking apparatus which can evenly cook the inside and the outside of a cooking object when frying.

In one aspect, the cooking apparatus includes according to claim 1 a cavity unit having a cooking chamber therein, a side wall plate with a discharge hole section, and a top wall plate with an upper heater hole section; a door on or over the cavity unit, configured to open and close an opening of the cavity unit; a circulation duct unit connected to the discharge hole section, configured to guide air from the cooking chamber through the discharge hole section and back to the cooking chamber and an upper heater unit on or over the top wall plate, wherein the circulation duct unit comprises: a circulation duct having one end connected to the discharge hole section and another end connected to a suction hole section in or of the side wall plate, configured to guide air discharged through the discharge hole section to the suction hole section; and
a duct opening and closing section in the circulation duct, configured to open and close an internal flow path of the circulation duct, wherein the circulation duct includes a discharge opening configured to discharge air from the discharge hole section out of the circulation duct, and the duct opening and closing section closes the discharge opening when opening the internal flow path of the circulation duct, and opens the discharge opening when closing the internal flow path of the circulation duct.

The upper heater unit may include an upper heater over the top wall plate, configured to supply heat and/or hot air to the cooking chamber through the upper heater hole section; and an upper heater cover on or over the top wall plate, configured to cover the upper heater.

The upper heater unit further includes an upper insulating cover between the upper heater and the upper heater cover.

The upper heater unit may further include an upper fan in or under the upper heater cover; and an upper motor configured to rotate the upper fan.

The circulation duct unit include a circulation duct having one end connected to the discharge hole section and another end connected to a suction hole section in or of the side wall plate, configured to guide air discharged through the discharge hole section to the suction hole section; and a duct opening and closing section in the circulation duct, configured to open and close an internal flow path of the circulation duct.

The circulation duct include a discharge opening configured to discharge air from the discharge hole section outs of the circulation duct, and the duct opening and closing section close the discharge opening when opening the internal flow path of the circulation duct and may open the discharge opening when closing the internal flow path of the circulation duct.

One of the discharge hole section and the suction hole section may be in an upper part of the side wall plate, and the other may be in a lower part of the side wall plate.

Alternatively, one of the discharge hole section and the suction hole section may be in a front part of the side wall plate, and the other may be in a rear part of the side wall plate.

In another aspect, the cooking apparatus include a cavity unit having a cooking chamber therein, a side wall plate with a discharge hole section, and a top wall plate with an upper heater hole section; a door on or over the cavity unit, configured to open and close an opening of the cavity unit; a discharge opening and closing unit on the side wall plate, configured to open and close the discharge hole section; and an upper heater unit on or over the top wall plate.

The upper heater unit may include an upper heater over the top wall plate, configured to supply heat and/or hot air to the cooking chamber through the upper heater hole section; and an upper heater cover on or over the top wall plate to cover the upper heater.

The upper heater unit may further include an upper insulating cover between the upper heater and the upper heater cover.

The upper heater unit may further include an upper fan in or under the upper heater cover; and an upper motor configured to rotate the upper fan.

The discharge opening and closing unit may include discharge rails on the side wall plate; and a discharge opening and closing door that moves or slides along the discharge rails to open and close the discharge hole section.

In another aspect, the cooking apparatus may include a cavity unit having a cooking chamber therein, a side wall plate with seating projections, and a top wall plate with an upper heater hole section; a door on or over the cavity unit, configured to open and close an opening of the cavity unit; an upper heater unit on or over the top wall plate, configured to supply heat and/or hot air to the cooking chamber through the upper heater hole section; and a cooking container including a housing unit with an entrance through which hot air enters, and a support unit on the housing unit and on which one or more cooking objects to be cooked by the hot air are placed, wherein the cooking container is configured to be placed on and/or supported by the seating projections. The support unit may comprise a plurality of first projections or rails on a first side wall plate of the cavity unit, and a plurality of second projections or rails on a second side wall plate of the cavity unit opposite to the first side wall plate. The plurality of first projections or rails and the plurality of second projections or rails may be configured to vary a distance between a bottom or lowermost surface of the cooking container and a bottom wall plate of the cooking chamber.

The cooking apparatus may further include a circulation duct unit connected to a discharge hole section in the side wall plate, configured to guide air from the cooking chamber through the discharge hole section and back to the cooking chamber.

The cooking apparatus may further include a discharge opening and closing unit on the side wall plate, configured to open and close the discharge hole section. Air in the cooking chamber may be discharged from the cooking chamber through the discharge hole section.

### BRIEF DESCRIPTION OF THE DRAWINGS

The above and other aspects, features and other advantages will be more clearly understood from the following detailed description taken in conjunction with the accompanying drawings, in which:
FIG. 1 is a perspective view of an exemplary cooking apparatus in accordance with one or more embodiments of the present disclosure;
FIG. 2 is a perspective view illustrating an open door in the exemplary cooking apparatus in accordance with embodiment(s) of the present disclosure;
FIG. 3 is a rear perspective view illustrating the exemplary cooking apparatus having an open door in accordance with embodiment(s) of the present disclosure;
FIG. 4 is a front view schematically illustrating the exemplary cooking apparatus in accordance with embodiment(s) of the present disclosure;
FIG. 5 is a perspective view illustrating an exploded cavity unit and cabinet unit in the exemplary cooking apparatus in accordance with embodiment(s) of the present disclosure;
FIG. 6 is a perspective view illustrating an exploded cavity unit and back cover in the exemplary cooking apparatus in accordance with embodiment(s) of the present disclosure;
FIG. 7 is a perspective view illustrating an exploded cavity unit and upper heater unit are in the exemplary cooking apparatus in accordance with embodiment(s) of the present disclosure;
FIG. 8 is an exploded perspective view of the upper heater unit in the exemplary cooking apparatus in accordance with embodiment(s) of the present disclosure;
FIG. 9 is a perspective view illustrating an internal flow path of a closed circulation duct unit in the exemplary cooking apparatus in accordance with an embodiment of the present invention;
FIG. 10 is a perspective view illustrating an open internal flow path of the circulation duct unit in the exemplary cooking apparatus in accordance with an embodiment of the present invention;
FIG. 11 is a block diagram schematically showing an exemplary control flow for a cooking apparatus in accordance with an embodiment of the present invention;
FIG. 12 is a perspective view of an exemplary cooking container for a cooking apparatus in accordance with one or more embodiments of the present disclosure;
FIG. 13 is an exploded perspective view of the exemplary cooking container for a cooking apparatus in accordance with embodiment(s) of the present disclosure;
FIG. 14 is a cut-away perspective view of the exemplary cooking container for a cooking apparatus in accordance with embodiment(s) of the present disclosure;
FIG. 15 is a perspective view illustrating the rear surface of the support unit in the exemplary cooking container for a cooking apparatus in accordance with embodiment(s) of the present disclosure;
FIG. 16 is a view illustrating an exemplary cooking container in accordance with one or more embodiments of the present disclosure in a cooking apparatus during a frying mode of operation;
FIG. 17 is a perspective view illustrating an open discharge hole section in an exemplary cooking apparatus in accordance with one or more embodiments of the present disclosure;
FIG. 18 is a perspective view illustrating a closed discharge hole section in the exemplary cooking apparatus in accordance with embodiment(s) of the present disclosure; and
FIG. 19 is a block diagram schematically showing an exemplary control flow of the cooking apparatus in accordance with embodiment(s) of the present disclosure.

### DESCRIPTION OF SPECIFIC EMBODIMENTS

Hereinafter, embodiments of the present invention will be described with reference to accompanying drawings. However, the embodiments are for illustrative purposes only and are not intended to limit the scope of the invention.

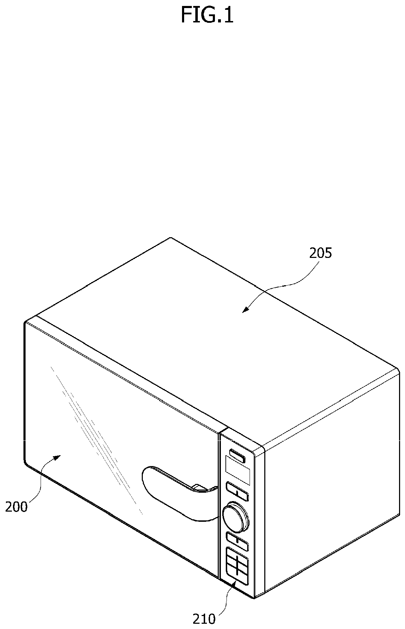

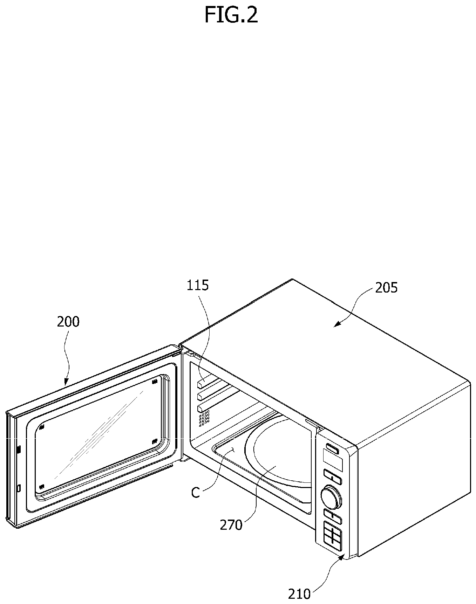

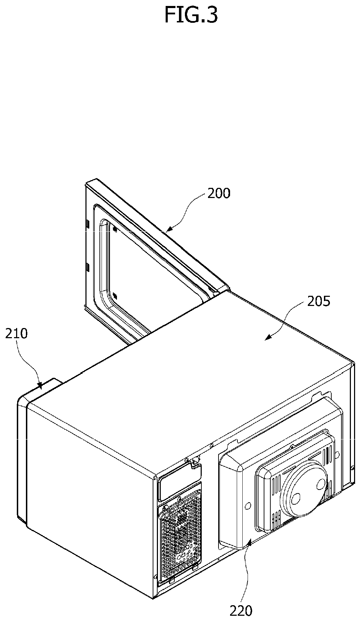

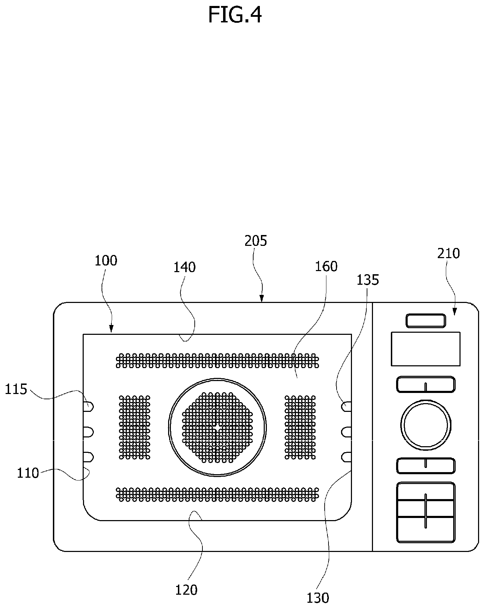

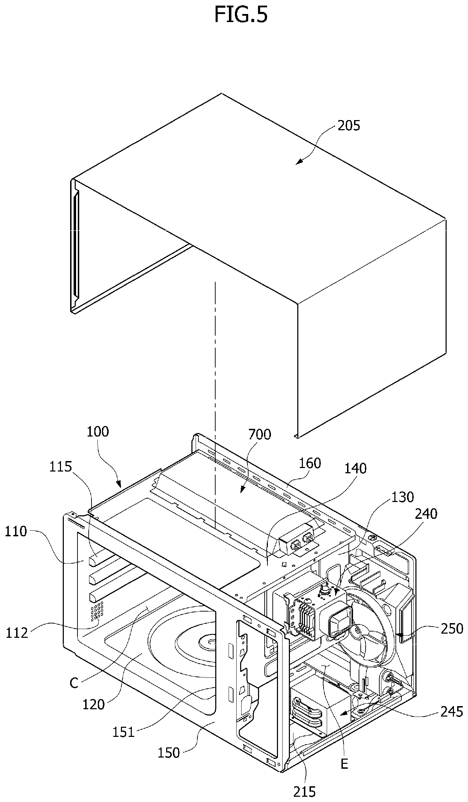

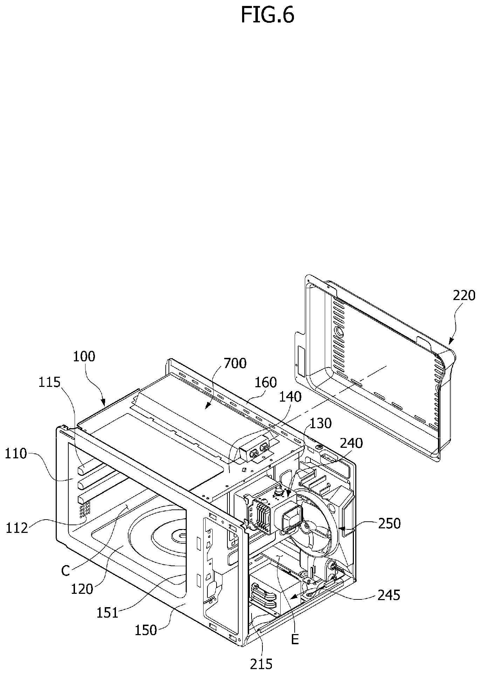

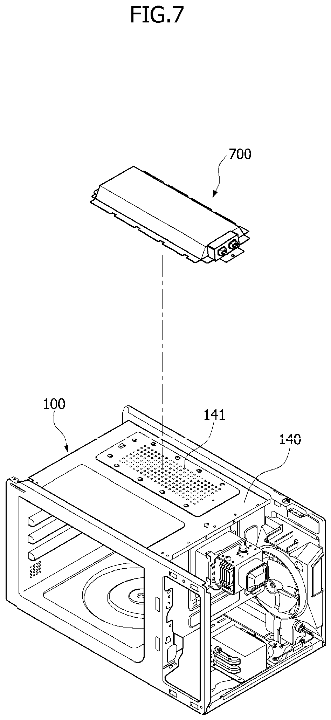

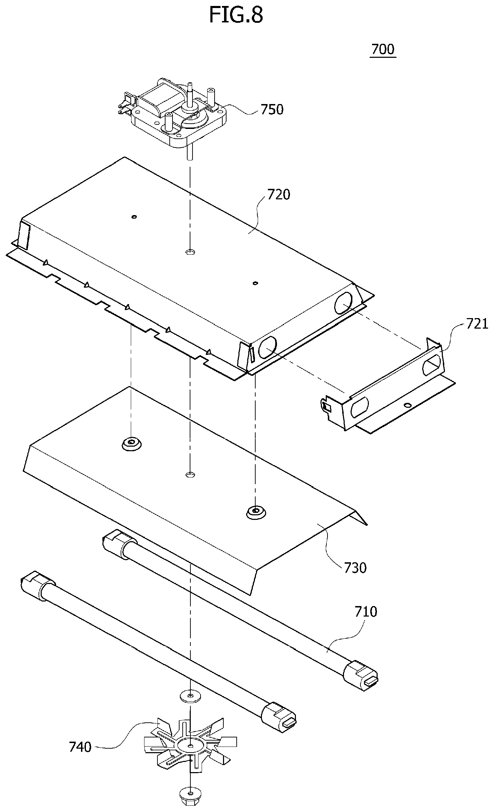

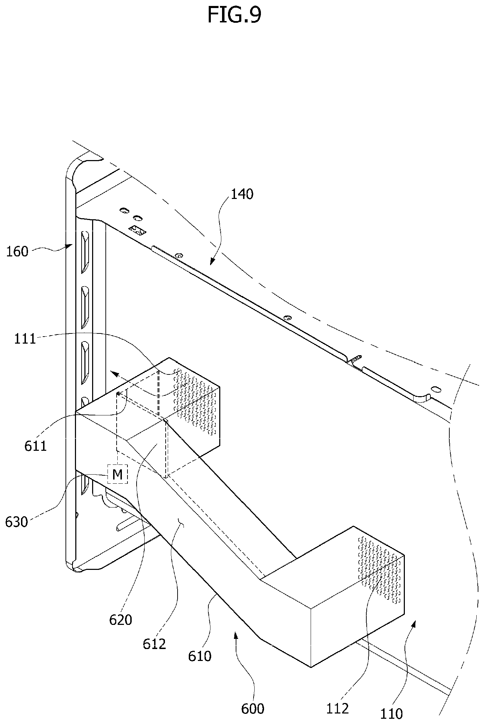

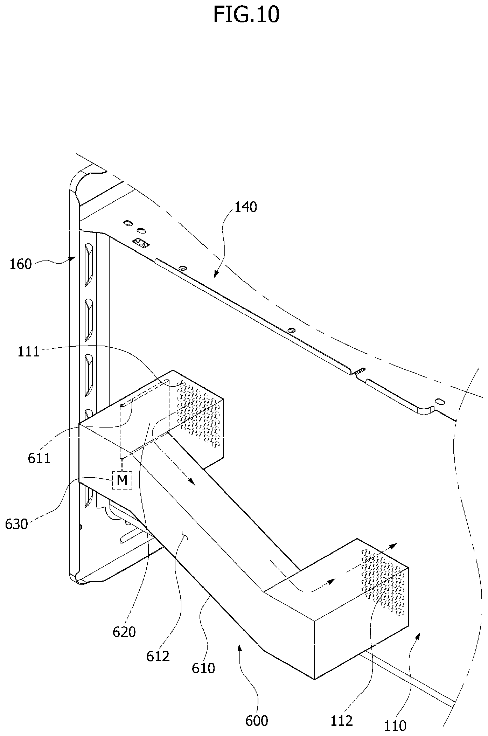

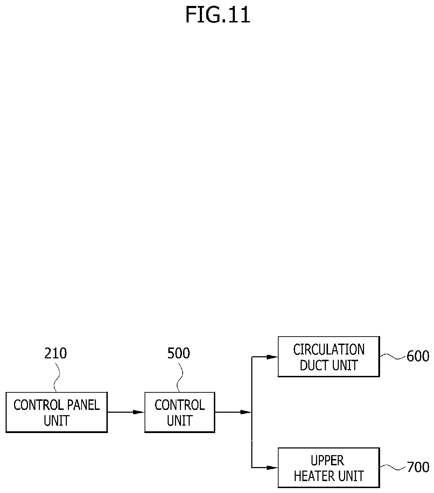

FIG. 1 is a perspective view of an exemplary cooking apparatus in accordance with one or more embodiments of the present disclosure, FIG. 2 is a perspective view illustrating an open door in the exemplary cooking apparatus in accordance with embodiment(s) of the present disclosure, FIG. 3 is a rear perspective view illustrating the exemplary cooking apparatus having an open door in accordance with embodiment(s) of the present disclosure, and FIG. 4 is a front view schematically illustrating the exemplary cooking apparatus in accordance with embodiment(s) of the present disclosure. FIG. 5 is a perspective view illustrating an exploded cavity unit and cabinet unit in the exemplary cooking apparatus in accordance with embodiment(s) of the present disclosure, and FIG. 6 is a perspective view illustrating an exploded cavity unit and back cover in the exemplary cooking apparatus in accordance with embodiment(s) of the present disclosure. FIG. 7 is a perspective view illustrating an exploded cavity unit and an upper heater unit in the exemplary cooking apparatus in accordance with embodiment(s) of the present disclosure, and FIG. 8 is an exploded perspective view of the upper heater unit in the exemplary cooking apparatus in accordance with embodiment(s) of the present disclosure. FIG. 9 is a perspective view illustrating an internal flow path of a closed circulation duct unit in the exemplary cooking apparatus in accordance with embodiment(s) of the present disclosure, and FIG. 10 is a perspective view illustrating an open internal flow path of the circulation duct unit in the exemplary cooking apparatus in accordance with embodiment(s) of the present disclosure. FIG. 11 is a block diagram schematically showing an exemplary control flow for a cooking apparatus in accordance with embodiment(s) of the present disclosure.

Referring to FIGS. 1 to 3, 6 and 11, a cooking apparatus in accordance with one or more embodiments of the present disclosure includes a cavity unit 100, a door unit 200, a cabinet unit 205, a control unit 500, and an upper heater unit 700.

Referring to FIGS. 2 and 4 to 6, the cavity unit 100 includes a cooking chamber C therein. Accordingly, a cooking object 60 may be put into and taken out of the cooking chamber C through the opening of the cavity unit 100, and may be cooked in the state in which it is put into the cooking chamber C.

The cavity unit 100 includes a left wall plate 110 which forms a left surface (e.g., of the cavity unit 100), a bottom wall plate 120 which forms a bottom surface (e.g., of the cavity unit 100), a right wall plate 130 which forms a right surface (e.g., of the cavity unit 100), a top wall plate 140 which forms a top surface (e.g., of the cavity unit 100), a front wall plate 150 which forms a front surface (e.g., of the cooking apparatus), and a rear wall plate 160 which forms a rear surface (e.g., of the cavity 100 and/or the cooking apparatus).

While the left wall plate 110, the bottom wall plate 120 and the right wall plate 130 may be integral with one another, the present disclosure is not limited to such an arrangement, and it is to be noted that the left wall plate 110, the bottom wall plate 120 and the right wall plate 130 may be separately formed and then integrally assembled with one another by locking members such as screws, tongue-and-groove configurations, or welds.

Referring to FIGS. 9 and 10, a discharge hole section 111 may be in the left wall plate 110. Air in the cooking chamber C may be discharged outside of the cooking chamber C through the discharge hole section 111.

Due to discharge of air through the discharge hole section 111, in general cooking, it is possible to prevent a temperature inside the cooking chamber C from rising excessively and filling the inside of the cooking chamber C with steam or smoke. In this way, due to the presence of the discharge hole section 111, the cooking apparatus may stably carry out a general cooking operation.

Referring to FIGS. 2 and 4, left seating projections 115 are on the inner surface of the left wall plate 110, and right seating projections 135 are on the inner surface of the right wall plate 130 opposite to the left seating projections 115. The left seating projections 115 and the right seating projections 135 project or extend into the interior of the cooking chamber C. The seating projections 115 and 135 may take the form of rails, bars, or other physical supports, integrated with or securely fastened to the side wall plates 110 and 130. Each of the seating projections 115 and 135 may have a length less than or equal to a depth of the cooking chamber C, and may consist of a single projection or a plurality of collinear projections with a space between adjacent collinear projections.

A plurality of left seating projections 115 and a plurality of right seating projections 135 are arranged vertically and/or in parallel, at the same heights (e.g., relative to the bottom wall plate 120 and/or the top wall plate 140). Accordingly, a user may carry out a cooking operation by placing or seating a cooking container 1 on the seating projections 115 and 135 at an appropriate height, according to the characteristic(s) of the cooking object(s) 60 and/or the cooking mode of the cooking apparatus.

Referring to FIGS. 2 and 4 to 6, a base section 215 forms a base of the cooking apparatus below the bottom wall plate 120. The base section 215 is detachably coupled to the bottom wall plate 120 by locking members, such as screws, nuts and bolts, tongue-and-groove connectors, or the like.

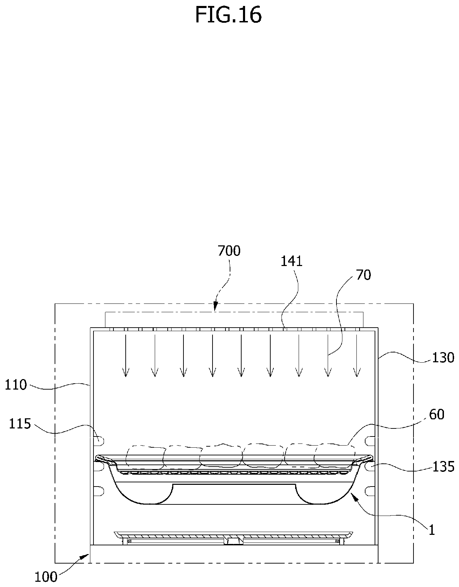

A rotation plate driving section (not shown) may be in the space between the bottom wall plate 120 and the base section 215. The rotation plate driving section is coupled to a rotation plate 270 (over the bottom wall plate 120; see, e.g., FIG. 16) by a shaft that passes through the bottom wall plate 120. The rotation plate constitutes or comprises a flat circular plate, and a cooking container may be placed on the rotation plate. Accordingly, the rotation plate 270 rotates when powered by the rotation plate driving section.

A suction mechanism (not shown) may be in, on, behind or provided to a side wall plate (e.g., the right wall plate 130). In one embodiment, the suction mechanism comprises a fan and a motor configured to rotate the fan. Air outside the cooking chamber C enters into the cooking chamber C through the suction mechanism. Due to the introduction of air into the cooking chamber C through the suction mechanism, in a general cooking mode, air inside the cooking chamber C may be smoothly discharged out of the cooking chamber C through the discharge hole section 111.

Referring to FIG. 7, the top wall plate 140 is coupled to the left wall plate 110 and the right wall plate 130 by locking members such as screws, tongue-and-groove configurations, or welds. An upper heater hole section 141 may be in the top wall plate 140. The upper heater hole section 141 defines a path through which the heat generated by upper heaters 710 is supplied to the cooking chamber C, when the upper heaters 710 are above the top wall plate 140. In some embodiments, the upper heater hole section 141 comprises a plurality of holes densely arranged or placed at substantially regular intervals.

Referring to FIGS. 2 and 4 to 6, the front wall plate 150 is coupled to the front ends of the left wall plate 110, the bottom wall plate 120, the right wall plate 130 and the top wall plate 140. A front wall hole section 151 which communicates with the cooking chamber C is in the front wall plate 150.

A control panel unit 210 is mounted, attached or affixed to the front wall plate 150. In one example, the control panel unit 210 is on one side (e.g., the right part) of the front wall plate 150, and the door unit 200 over the front wall hole section 151 is on an opposite side (e.g., the left part) of the front wall plate 150.

The control panel unit 210 includes one or more control buttons configured to select and/or initiate various cooking functions of the cooking apparatus, including a power switch. If a control button is pressed, a select signal is transferred to the control unit 500, and a selected cooking function is carried out.

Referring to FIGS. 1 to 5, the door unit 200 is over the cavity unit 100. While it is illustrated that the door unit 200 is hingedly coupled to the front wall plate 150, the present disclosure is not limited to such an arrangement or configuration.

The door unit 200 opens or closes the opening of the cavity unit 100 (e.g., the front wall hole section 151 of the front wall plate 150). When the door unit 200 is opened, a cooking container 1, 2, 3 or 4 may be put into or taken out of the cooking chamber C, and when the door unit 200 is closed, the cooking object 60 may be heated or cooked.

The cabinet unit 205 may form the upper surface and left and right side surfaces of the cooking apparatus, and protects the cavity unit 100 and an electric outfitting room E from external forces and/or circumstances, in cooperation with the front wall plate 150 and the rear wall plate 160. The lower surface of the cooking apparatus comprises the base section 215. The base section 215 is coupled to the bottom wall plate 120, and abutted by the lower end of the cabinet unit 205. The base section 215 protects the lower surface of the cooking apparatus from external forces and/or circumstances.

Referring to FIGS. 6 to 8, the upper heater unit 700 is on the top wall plate 140, and may comprise or constitute one or more upper heaters 710 and an upper heater cover 720. The upper heater unit 700 may further include an upper insulating cover 730, an upper fan 740, and an upper motor 750.

The upper heaters 710 are above the top wall plate 140, and may function as a heat source to generate heat. The heat generated by the upper heaters 710 heats the surroundings of the upper heaters 710, and in particular, air in the upper heater cover 720. Then, the heated air is supplied to the cooking chamber C as hot air, through the upper heater hole section 141 by operation of the upper fan 740. In one or more embodiments, a pair of upper heaters 710 may be on opposed sides or ends of the upper heater unit 700 with the upper fan 740 therebetween.

The upper heater cover 720 is mounted, attached, affixed, or secured to the top wall plate 140 by locking members such as screws, welds or tongue-and-groove configurations, to cover the upper heaters 710 and the upper fan 740. The upper heaters 710 may be mounted, affixed or secured to the upper heater cover 720 by an upper heater mounting section 721.

The upper heater cover 720 defines a space with a predetermined size between it and the top wall plate 140. Accordingly, air in the space defined by the upper heater cover 720 may be heated by the upper heaters 710.

The upper insulating cover 730 is configured to cover the upper heaters 710. The upper insulating cover 730 maybe between the upper heaters 710 and the upper heater cover 720. The upper insulating cover 730 is coupled, affixed, attached or secured to the upper heater cover 720 by locking members such as screws or an adhesive.

The upper insulating cover 730 includes an insulating material (e.g., a material with an excellent insulation property, such as a ceramic, an insulating fiber-based insulator sheet such as fiberglass, etc.). Therefore, it is possible to restrain or prevent the heat from the upper heaters 710 from radiating or escaping outside of the upper insulating cover 730 through the top of the cooking apparatus.

The upper fan 740 is above the top wall plate 140. The upper fan 740 is rotated by the upper motor 750, and supplies air from the upper heater cover 720 heated by the upper heaters 710 to the cooking chamber C. The heated air is supplied to the cooking chamber C through the upper heater hole section 141 of the top wall plate 140.

The upper motor 750 is coupled to the upper fan 740 and serves as a power source for providing power. The upper motor 750 is also generally configured to rotate the upper fan 740. The upper insulating cover 730 and the upper heater cover 720 are between the upper motor 750 and the upper heaters 710.

In this arrangement or configuration, it is possible to prevent the heat generated by the upper heaters 710 from influencing or adversely affecting the upper motor 750. The power transfer shaft of the upper motor 750 is coupled to the upper fan 740 through the upper insulating cover 730 and the upper heater cover 720.

An upper cooling fan (not shown) for cooling the upper motor 750 may also be provided to and/or included in the upper heater unit 700. The upper cooling fan may be coupled to the upper motor 750 by a shaft, and may rotate in an interlocked manner with the upper fan 740 when the upper motor 750 operates. The upper heater unit 700 is covered and protected from external forces and/or circumstances by the cabinet unit 205.

Referring to FIGS. 5 and 6, in the electric outfitting room E, there are a magnetron 240 that generates microwaves, a high voltage transformer 245 configured to supplying a high voltage to the magnetron 240, and a cooling fan section 250 configured to cooling various electric parts in the electric outfitting room E.

Referring to FIGS. 9 to 11, the cooking apparatus in accordance with the present invention further includes a circulation duct unit 600.

The circulation duct unit 600 is connected to the discharge hole section 111 of the left wall plate 110, and is configured to guide the air discharged out of the cooking chamber C through the discharge hole section 111 back to the cooking chamber C.

The circulation duct unit 600 includes a circulation duct 610 and a duct opening and closing section 620. The circulation duct 610 may have a duct-like shape (e.g., with a substantially square, rectangular, circular, oval, etc. cross-section) and an internal flow path 612. The circulation duct 610 may be mounted, affixed, or attached to, or integrated with, the outer surface of the left wall plate 110 (e.g., to the left wall plate 110 outside the cooking chamber C).

One end of the circulation duct 610 is connected to and/or overlapping the discharge hole section 111, and another end of the circulation duct 610 is connected to and/or overlapping a suction hole section 112. Accordingly, the air discharged through the discharge hole section 111 is guided to the suction hole section 112 along the internal flow path 612 of the circulation duct 610.

A discharge opening 611 is in the circulation duct 610. The discharge opening 611 is on one sidewall of the circulation duct 610 adjacent to the discharge hole section 111. Accordingly, the air discharged through the discharge hole section 111 is discharged out of the circulation duct 610 through the discharge opening 611.

In this way, when air in the cooking chamber C enters the circulation duct 610 through the discharge hole section 111, air is guided back into the cooking chamber C along the internal flow path 612 or is discharged out of the circulation duct 610 through the discharge opening 611. Such air flow depends on the duct opening and closing section 620 in the circulation duct 610.

The duct opening and closing section 620 is rotatable and configured to open and close the internal flow path 612 of the circulation duct 610. The duct opening and closing section 620 may be coupled to the circulation duct 610 using one or more hinges, and may be coupled to a duct driving section 630 outside the circulation duct 610. Accordingly, as the duct opening and closing section 620 is rotated by the duct driving section 630, the duct opening and closing section 620 opens or closes the internal flow path 612 of the circulation duct 610. The duct opening and closing section 620 is adjacent to the discharge opening 611 and is capable of opening and closing (and/or configured to open and close) the discharge opening 611.

In the case where the duct opening and closing section 620 opens the internal flow path 612 of the circulation duct 610, the duct opening and closing section 620 closes the discharge opening 611. That is to say, the opening of the internal flow path 612 and the closing of the discharge opening 611 is simultaneously implemented through only the operation of the duct opening and closing section 620. Thus, when air in the cooking chamber C enters the circulation duct 610 through the discharge hole section 111, air is naturally supplied back to the cooking chamber C through the internal flow path 612.

The control unit 500 operates the duct opening and closing section 620 to open the internal flow path 612 of the circulation duct 610 in frying mode. Accordingly, since the air discharged out of the cooking chamber C through the discharge hole section 111 is circulated back to the cooking chamber C through the suction hole section 112, heat loss may be suppressed or minimized as a result of discharging the air in the cooking chamber C.

In the present invention, a cooking object is fried using the fat or fat constituent in the cooking object itself. Alternatively, if desired, the cooking object may be sprayed or at least partially coated with a very small or light amount of oil prior to frying. In frying, the cooking object is placed in the cooking container 1 or 2 which may be for air frying (e.g., configured to fry the cooking object with hot air), using at least one of the heater units 300 and 700. Accordingly, in one or more embodiments, frying may be referred to as "air frying."

One of the discharge hole section 111 and the suction hole section 112 may be in the upper part of the side wall plate 110 and/or 130, and the other of the discharge hole section 111 and the suction hole section 112 may be in the lower part of the side wall plate 110 and/or 130. In one or more embodiments, the discharge hole section 111 is in the upper part of the left wall plate 110, and the suction hole section 112 is in the lower part of the left wall plate 110. Since air in the cooking chamber C is discharged through the upper discharge hole section 111, and air is introduced into the cooking chamber C through the lower suction hole section 112, air circulation efficiency, in particular, the upward and/or downward circulation efficiency in the cooking chamber C, may be improved through the discharge and introduction of air through the discharge hole section 111 and the suction hole section 112, respectively. Hence, as air circulation is actively implemented in the cooking chamber C, the cooking time of the cooking object(s) may be reduced or reduced or shortened, and the cooking performance may be improved.

One of the discharge hole section 111 and the suction hole section 112 may be in the front part of the side wall plate 110 and/or 130, and the other of the discharge hole section 111 and the suction hole section 112 may be in the rear part of the side wall plate 110 and/or 130. In one or more embodiments, the discharge hole section 111 is in the rear part of the left wall plate 110, and the suction hole section 112 is in the front part of the left wall plate 110. Since air in the cooking chamber C is discharged through the rear discharge hole section 111, and air enter the cooking chamber C through the front suction hole section 112, air circulation efficiency, in particular, the upward and downward circulation efficiency in the cooking chamber C, may be improved through the discharge and introduction of air through the discharge hole section 111 and the suction hole section 112, respectively. Hence, as air circulation is actively implemented in the cooking chamber C, the cooking time of the cooking object(s) may be reduced or shortened, and the cooking performance may be improved.

In the case where the duct opening and closing section 620 closes the internal flow path 612 of the circulation duct 610, the duct opening and closing section 620 may operate to open the discharge opening 611. That is to say, the closing of the internal flow path 612 and the opening of the discharge opening 611 may be simultaneously implemented through the operation of the duct opening and closing section 620. Thus, when air in the cooking chamber C enters the circulation duct 610 through the discharge hole section 111, air is naturally discharged outside of the circulation duct 610 through the discharge opening 611.

The control unit 500 closes the duct opening and closing section 620 (and the internal flow path 612 of the circulation duct 610) in the general cooking mode. Accordingly, the air discharged out of the cooking chamber C through the discharge hole section 111 is discharged outside of the circulation duct 610 through the discharge opening 611. Due to the discharge of air from the cooking chamber C by the discharge hole section 111 and the discharge opening 611 in this way, it is possible to prevent the temperature inside the cooking chamber C from rising excessively and/or filling the inside of the cooking chamber C with steam or smoke in the general cooking mode.

As is apparent from the above descriptions, in the cooking apparatus in accordance with embodiments of the present disclosure, general cooking and frying, (e.g., air frying), may be carried out using one cooking apparatus. As a result, user convenience may be improved.

Also, in the cooking apparatus in accordance with embodiment(s) of the present disclosure, since frying may be carried out using the fat in the cooking object(s) without any need to separately supply oil to or on the cooking object(s), it is possible to prevent or reduce the likelihood of a safety-related accident due to oil having a high temperature, and the cooking cost may be reduced due to nonuse of oil.

Further, in the cooking apparatus in accordance with embodiment(s) of the present disclosure, since frying may be immediately carried out through heater units without the need to move or turn the cooking object(s), optionally after defrosting the cooking object(s) using microwaves, user convenience may be improved.

Moreover, in the cooking apparatus in accordance with embodiment(s) of the present disclosure, since frying as a main cooking mode may be carried out using hot air from heater units, optionally after provisionally, initially and/or partially cooking the cooking object(s) using microwaves, the inside and the outside of the cooking object(s) may be evenly cooked, and a crispy texture may be realized.

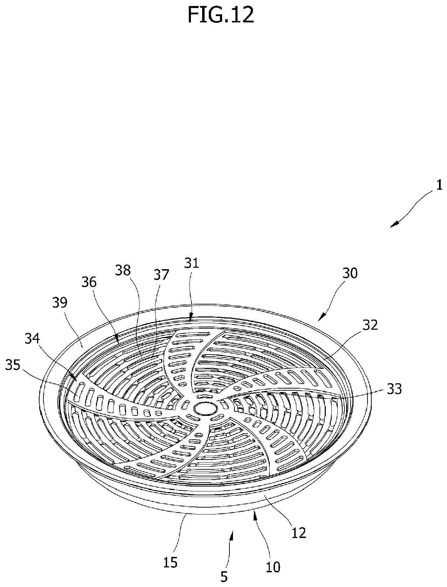

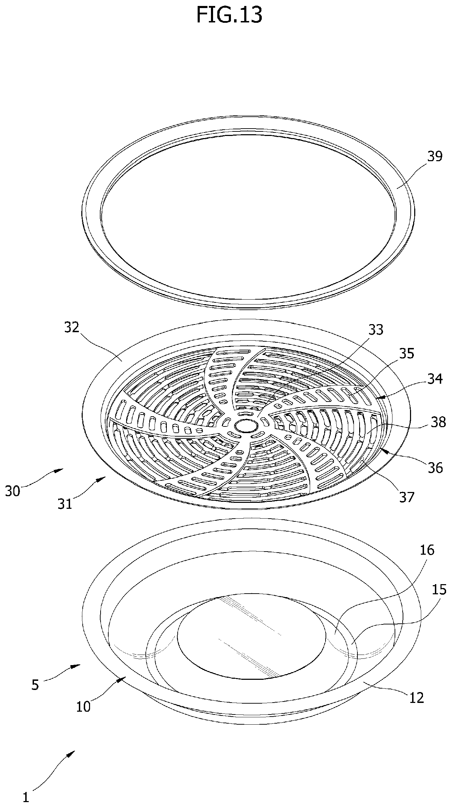

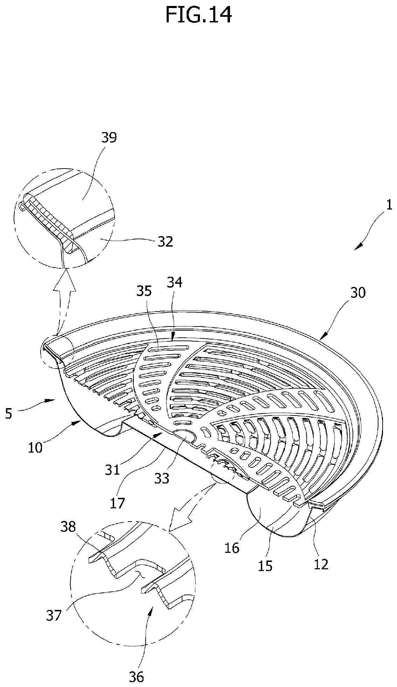

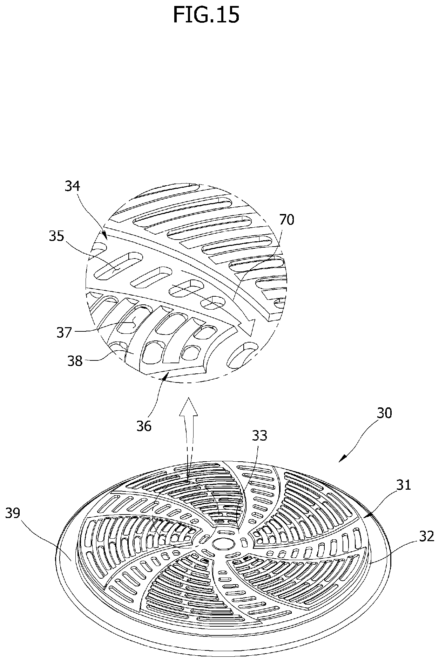

FIG. 12 is a perspective view of an exemplary cooking container for a cooking apparatus in accordance with one or more embodiments of the present disclosure, FIG. 13 is an exploded perspective view of the exemplary cooking container in accordance with embodiment(s) of the present disclosure, and FIG. 14 is a broken-away perspective view of the exemplary cooking container in accordance with embodiment(s) of the present disclosure. FIG. 15 is a perspective view illustrating the lower surface or underside of an exemplary support unit for a cooking container in accordance with an embodiment of the present disclosure, and FIG. 16 is a view illustrating an exemplary cooking container in a cooking apparatus in accordance with one or more embodiments of the present disclosure, in which a frying operation is being performed.

Referring to FIGS. 12 to 16, a cooking container 1 for a cooking apparatus in accordance with one or more embodiments of the present disclosure includes a housing unit 5 having an opening at an upper end thereof, and a support unit 30 on the housing unit 5 and on which one or more cooking objects 60 to be cooked by the hot air 70 are placed. The support unit 30 is supported by the housing unit 5.

The housing unit 5 includes a housing body 10 that has a shape in which the upper end and/or center is open. The housing body 10 may be stably placed in the cooking chamber C on the seating projections 115 and 135, on the outer circumference or edge(s) of the housing body 10 (e.g., side section 12).

The housing body 10 includes a housing side section 12, a housing bottom section 15, and a housing inside section 16.

The housing side section 12 supports the periphery of the support unit 30 and has a shape which extends downward. When viewed from the top, the housing side section 12 which forms the side surface of the housing body 10 has a circular or ring shape, and when viewed from the side, has a rounded contour or curved cross-section, which may be rounded from the uppermost end or surface to the lowermost end or surface of the housing side section 12.

The housing bottom section 15 connected to and/or integral with the lowermost end or surface of the housing side section 12 extends inwardly from the lowermost end or surface of the housing side section 12. The housing bottom section 15 extends horizontally from the lowermost end or surface of the housing side section 12 and has an annular shape.

The housing inside section 16 extends upward from the housing bottom section 15, and is connected to a central bottom section 17. The housing inside section 16 extends to the central bottom section 17, and has a convex curved shape.

Since the housing inside section 16 may have a downwardly convex curved shape, as the hot air 70 flowing downward impinges on the central bottom section 17 and is then guided toward the housing inside section 16, the hot air 70 may stay in the cooking container 1 for a long time. Accordingly, cooking performance may improve, and the cooking time may be reduced or shortened.

Since the housing inside section 16 may have a funnel shape (or inverse funnel shape), in which the horizontal cross-sectional area decreases with distance from the surface on which the cooking container 1 is placed, the hot air 70 which flows downward toward the housing inside section 16 does not diverge or spread out, but rather, converges into or merges in the cooking container 1. Accordingly, as an increased amount or concentration of hot air 70 enters the cooking container 1, thermal efficiency may improve.

The housing body 10 may comprise a steel or aluminum body (which may be integrated or a single piece), with an optional coating of a low-stick or non-stick material such as Teflon or polycarbonate thereon. Stainless steel may also be used for the housing body 10, optionally without a coating thereon.

If radiation heat or convection heat from an upper heater unit 700 is transferred to the inside of the housing body 10, the radiation heat or convection heat reflected inside the housing body 10 moves toward the upper end or surface of the housing body 10, towards the support unit 30. In this way, as the bottom of the housing body 10 is closed, the supplied hot air 70 may be reflected upward to be utilized in cooking of the cooking object 60.

Since the housing side section 12, the housing bottom section 15, and the housing inside section 16 define a substantially U-shaped or substantially J-shaped cross-section, facile upward reflection of radiation heat or convection heat may be ensured, and radiation heat flowing downward from an upper position may be reflected back toward the upper end of the housing body 10, towards the support unit 30.

The support unit 30 on the housing unit 5 may have any of a variety of shapes, without departing from the technical concept(s) that it has a plurality of through-holes, and the cooking object(s) 60 to be cooked by the hot air 70 are placed thereon. The support unit 30 in accordance with various embodiments includes a support body section 31 and a cover section 39.

The support body section 31 may have any of a variety of shapes without departing from the technical concept that it includes the plurality of through-holes through which the hot air 70 flows, and the cover section 39 may have any of a variety of shapes without departing from the technical concept that it covers the outer periphery of the support body section 31.

The support body section 31 in accordance with various embodiment(s) includes a peripheral support part 32, a central support part 33, a plurality of first support parts 34, and a plurality of second support parts 36.

The peripheral support part 32 may have an annular shape. The cover section 39 covers the peripheral support part 32. The central support part 33, the first support parts 34 and the second support parts 36 are generally inside the peripheral support part 32.

The peripheral support part 32 covered by the cover section 39 may have a ring or annular shape, and may comprise or consist essentially of aluminum. The central support part 33 is at the center portion of the support body section 31, inside the peripheral support part 32. The central support part 33 and the peripheral support part 32 are separate from each other.

The first support parts 34 and the second support parts 36 which extend from the central support part 33 are connected to the peripheral support part 32. Since the first support parts 34 and the second support parts 36 may be curved and/or have a spiral shape, they may guide the rotation of the hot air 70.

The first support parts 34 have first through-holes 35 through which the hot air 70 passes. The first support parts 34 extend from the central support part 33 to the peripheral support part 32, and may have a curved or spiral shape. The first through-holes 35 may have an oval or curved oval (e.g., "kidney") shape. A plurality of first support parts 34 are along the circumference of the central support part 33, and the second support parts 36 are between adjacent first support parts 34.

The second support parts 36 have second through-holes 37 through which the hot air 70 passes, and extend like the first support parts 34. The second support parts 36 may have a curved or spiral shape. The second through-holes 37 may have an oval or curved oval (e.g., "kidney") shape. The second support parts 36 may have a width that is at least two times the width of the first support parts 34. Cooking the cooking object(s) 60 is mainly carried out by and/or on the second support parts 36.

Since the uppermost surface of the second support parts 36 is below the first support parts 34, the hot air 70 moving from the lowermost end or surface of the support unit 30 toward the uppermost end or surface of the support unit 30 rotates along the lower surfaces of the first support parts 34 and forms a vortex flow. As a result, the time during which the hot air 70 is in contact with the cooking object(s) 60 may increase.

The first through-holes 35 in the first support parts 34 and the second through-holes 37 in the second support parts 36 extend in a circumferential direction.

The first through-holes 35 and the second through-holes 37 may form arcs centered on the central support part 33. A plurality of first through-holes 35 and a plurality of second through-holes 37 are between the central support part 33 and the peripheral support part 32.

The second support parts 36 include rounded support portions 38 having an arc-like shape and a convex upward cross-section, although the second support parts 36 are not limited to such a configuration. The arc(s) of the second support parts 36 are generally centered on the central support part 33.

The rounded support portions 38 may have an upwardly convex shape, and the lowermost surface of the rounded support portions 38 may be concave. Thus, juice or other liquid(s) coming out from the cooking object(s) 60 on the rounded support portions 38 flows downward on the rounded support portions 38 and optionally into the body 10. As a result, cleaning the surface(s) of the second support parts 36 may be relatively easy or convenient to perform.

Further, since the hot air 70 supplied to the lower portions of the rounded support portions 38 may stay in the concave grooves of the rounded support portions 38, the contact time of the hot air 70 with the rounded support portions 38 increases, and heating the rounded support portions 38 may be easily implemented, whereby the cooking time for the cooking object(s) 60 may be reduced or shortened.

The cover section 39 covering the peripheral support part 32 may comprise rubber and/or silicon. Thus, it is possible to prevent sparks from occurring at the periphery of the support unit 30 while the support unit 30 is placed in a microwave oven.

The support unit 30 in accordance with one or more embodiment(s) may comprise aluminum coated with Teflon or other low-stick or non-stick material. Since aluminum has high heat conductivity, heating the cooking object(s) 60 may be quickly implemented, and the coating may prevent adhesion of the cooking object(s) 60 to the support unit 30.

Since the cover section 39 may include silicone, it is generally between the support unit 30 (which may comprise aluminum) and the housing body 10 (which may comprise a steel plate), and can prevent the occurrence of a spark.

Referring to FIGS. 12 and 16, since cooking is carried out using the cooking container 1 on the seating projections 115 and 135, it is possible to uniformly heat the cooking object(s) 60.

The cooking apparatus provides air with a high temperature to the cooking object(s) 60 through the upper heater unit 700. The radiation heat and the convection heat from the upper heater unit 700 is supplied to the cooking container 1 in a downward direction.

Hereinafter, operations of the cooking container 1 for a cooking apparatus in accordance with one or more embodiments of the present disclosure will be described in detail.

After placing the cooking container 1 on the seating projections 115 and 135, the upper heater unit 700 is operated (e.g., turned on). As the upper heater unit 700 is operated (e.g., by actuation of a heater including one or more resistive or other heating lines), hot air moves or flows toward the support unit 30 in the downward direction. The hot air 70 that moves or flows downward from the support unit 30 after heating the cooking object(s) 60 is reflected inside the housing body 10 and then moves or flows upwards, back towards the support unit 30.

Since the hot air reflected by the housing body 10 is transferred to the lower end of the support unit 30 and may provide secondary heat to the cooking object(s) 60, the cooking performance may improve, and the cooking time may be reduced or shortened.

Furthermore, as the hot air 70 moving upward toward the upper end or surface of the support unit 30 may stay in the concave grooves of the rounded support portions 38 in the second support parts 36, the time during which the hot air 70 and the support body section 31 contact each other may increase, by which the support body section 31 may be easily heated.

Hereafter, a cooking apparatus in accordance with one or more further embodiments of the present disclosure will be described with reference to drawings. For the sake of convenience in explanations, the same reference numerals will be used to refer to component elements with the same constructions and functions as the first embodiment of the present disclosure, and detailed descriptions thereof will be omitted.

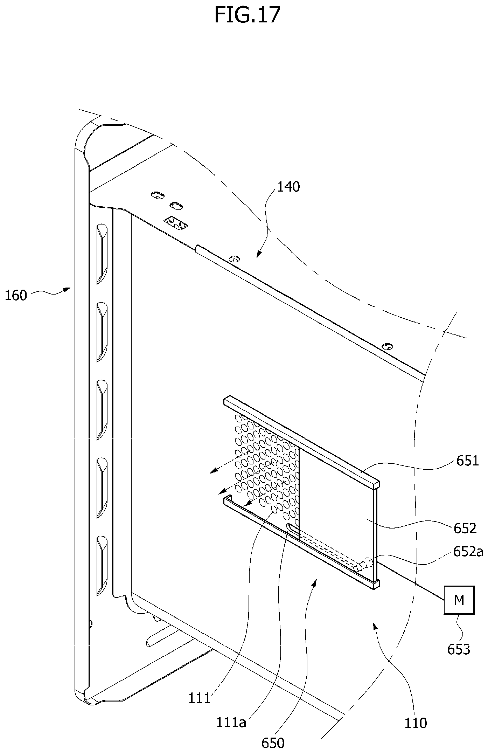

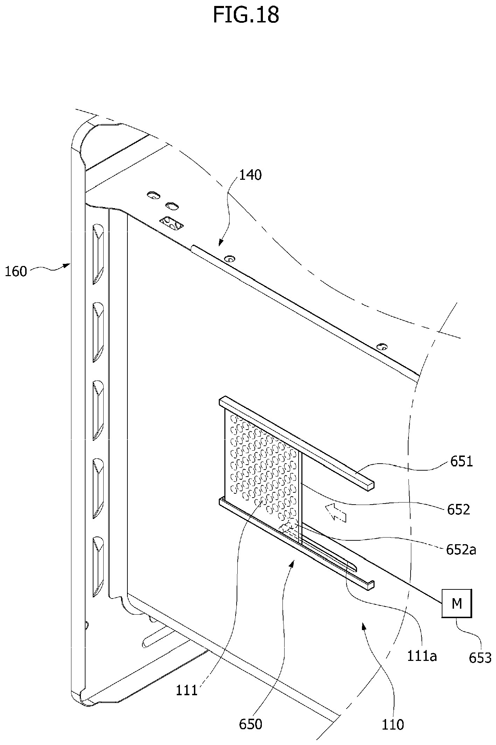

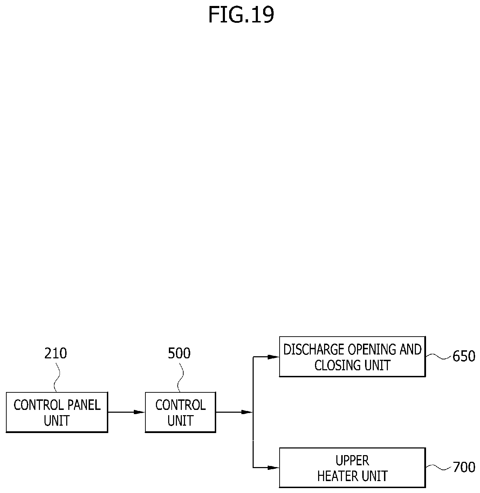

FIG. 17 is a perspective view illustrating an open discharge hole section in an exemplary cooking apparatus in accordance with one or more embodiments of the present disclosure, FIG. 18 is a perspective view illustrating a closed discharge hole section in the exemplary cooking apparatus in accordance with embodiment(s) of the present disclosure, and FIG. 19 is a block diagram schematically showing an exemplary control flow for the cooking apparatus in accordance with embodiment(s) of the present disclosure.

Referring to FIGS. 17 to 19, a cooking apparatus in accordance with one or more embodiments of the present disclosure includes a cavity unit 100, a door unit 200, a cabinet unit 205, a control unit 500 and an upper heater unit 700, and may further include a discharge opening and closing unit 650 instead of a circulation duct unit.

The discharge opening and closing unit 650 opens and closes a discharge hole section 111. The discharge opening and closing unit 650 opens and closes the discharge hole section 111 according to the cooking mode.

In the general cooking mode, as the discharge opening and closing unit 650 opens the discharge hole section 111, air inside the cooking chamber C may be discharged out of the cooking chamber C. As a result, in the general cooking mode, it is possible to prevent the temperature inside the cooking chamber C from rising excessively and/or the inside of the cooking chamber C from filling with steam or smoke.

In frying mode, the discharge opening and closing unit 650 closes the discharge hole section 111, and heat loss due to discharge of air in the cooking chamber C may be suppressed.

The discharge opening and closing unit 650 includes discharge rails 651 and a discharge opening and closing door 652. The discharge rails 651 are on the outer surface of a wall plate (e.g., the left wall plate 110). In one embodiment, a pair of discharge rails 651 are above and below the discharge hole section 111 and facing each other. The discharge opening and closing door 652 fits between the discharge rails 651, and the sliding movement of the discharge opening and closing door 652 may be guided and/or controlled by the pair of discharge rails 651.

The discharge rails 651 and the discharge opening and closing door 652 may comprise a heat-resistant material so that the discharge rails 651 and the discharge opening and closing door 652 do not degrade from the high temperature of the air inside the cooking chamber C.

A discharge opening and closing knob 652a may be on the discharge opening and closing door 652. In correspondence with the discharge opening and closing knob 652a, a discharge opening and closing slot 111a may be in the left wall plate 110.

The discharge opening and closing knob 652a is on the inner surface of the discharge opening and closing door 652 and projects toward the cooking chamber C by passing through the discharge opening and closing slot 111a. As the user moves the discharge opening and closing knob 652a which projects into the cooking chamber C through the left wall plate 110 left or right, the discharge opening and closing door 652 may slide and/or move leftward or rightward. The leftward and rightward movement of the discharge opening and closing knob 652a is guided and/or controlled by the discharge opening and closing slot 111a. Accordingly, the discharge opening and closing slot 111a may have a length corresponding to the movement length and/or distance of the discharge opening and closing knob 652a.

In this way, the discharge opening and closing knob 652a and the discharge opening and closing slot 111a are additionally provided enable the user to manually open or close the discharge hole section 111. Alternatively, the discharge opening and closing door 652 may be opened or closed automatically according to the cooking mode.

The discharge opening and closing unit 650 may further include a discharge opening and closing driving section 653. The discharge opening and closing driving section 653 is connected to the discharge opening and closing door 652 and slides or moves the discharge opening and closing door 652 left and right automatically. That is, the discharge opening and closing driving section 653 automatically opens or closes the discharge hole section 111 using the discharge opening and closing door 652 under the control of the control unit 500 when a cooking mode is selected using the control panel unit 210.

A driving device capable of automatically moving the discharge opening and closing door 652 left and right (or side to side, or horizontally) may comprise a motor and/or a mechanical cylinder.

According to embodiments of the present disclosure, it is possible to provide a cooking apparatus which can carry out not only general cooking but also frying.

According to embodiments of the present disclosure, since frying is carried out using the fat content in the cooking object(s), it is possible to prevent a safety-related accident due to high temperature oil, the nutritional and/or health benefits may increase, and the cooking cost may be reduced due to nonuse of oil.

According to embodiments of the present disclosure, defrosting and frying of a cooking object(s) may be simultaneously or sequentially carried out in one cooking apparatus, thereby improving user convenience.

According to embodiments of the present disclosure, frying and/or cooking may be carried out using both microwaves and hot air. As a result, the inside and the outside of the cooking object(s) may be evenly cooked when frying.

According to embodiments of the present disclosure, hot air to be discharged from the cooking chamber may be circulated back to the cooking chamber through a circulation duct unit. As a result, heat loss may be reduced or suppressed.

According to embodiments of the present disclosure, since it is possible to block hot air from being discharged outside of the cooking chamber using a duct opening and closing unit, heat loss may be reduced or suppressed.

Embodiments of the present invention have been disclosed above for illustrative purposes.

## Claims

1. A cooking apparatus comprising:
a cavity unit (100) having a cooking chamber (C) therein, a side wall plate (110, 130) with a discharge hole section (111), and a top wall plate (140) with an upper heater hole section (141);
a door unit (200) on or over the cavity unit (100), configured to open and close an opening of the cavity unit (100);
a circulation duct unit (600) connected to the discharge hole section (111), configured to guide air discharged from the cooking chamber (C) through the discharge hole section (111) and back to the cooking chamber (C) and
an upper heater unit (700) on or over the top wall plate (140),
**characterized in that**, wherein the circulation duct unit (600) comprises:
a circulation duct (610) having one end connected to the discharge hole section (111) and another end connected to a suction hole section (112) in or of the side wall plate (110, 130), configured to guide air discharged through the discharge hole section (111) to the suction hole section (112); and
a duct opening and closing section (620) in the circulation duct (610), configured to open and close an internal flow path of the circulation duct (610),
wherein the circulation duct (610) includes a discharge opening (611) configured to discharge air from the discharge hole section (111) out of the circulation duct (610), and the duct opening and closing section (620) closes the discharge opening (611) when opening the internal flow path of the circulation duct (610), and opens the discharge opening (611) when closing the internal flow path of the circulation duct (610).

2. The cooking apparatus according to claim 1, wherein the upper heater unit (700) comprises:
an upper heater (710) over the top wall plate (140), configured to supply heat and/or hot air to the cooking chamber (C) through the upper heater hole section (141); and an upper heater cover (720) on or over the top wall plate (140) configured to cover the upper heater (710).

3. The cooking apparatus according to claim 1 or 2, wherein the upper heater unit (700) further comprises:
an upper insulating cover (730) disposed between the upper heater (710) and the upper heater cover (720).

4. The cooking apparatus according to claims 1 to 3, wherein the upper heater unit (700) further comprises:
an upper fan (740) in or under the upper heater cover (720); and
an upper motor (750) configured to rotate the upper fan (740).

5. The cooking apparatus according to claims 1 to 4, wherein one of the discharge hole section (111) and the suction hole section (112) is in an upper part of the side wall plate (110, 130), and the other one of the discharge hole section (111) and the suction hole section (112) is in a lower part of the side wall plate (110, 130).

6. The cooking apparatus according to claims 1 to 5, wherein one of the discharge hole section (111) and the suction hole section (112) is in a front part of the side wall plate (110, 130), and the other one of the discharge hole section (111) and the suction hole section (112) is in a rear part of the side wall plate (110, 130).

7. The cooking apparatus according to claim 1, wherein the side wall plate (110, 130) includes seating projections (115, 135), wherein the upper heater unit (700) configured to supply hot air to the cooking chamber (C) through the upper heater hole section (141), and wherein the cooking apparatus further includes a cooking container including a housing unit (5) with an entrance through which hot air enters, and a support unit (30) on the housing unit (5) and on which one or more cooking objects are placed, wherein the cooking container is configured to be placed on and/or supported by the seating projections (115, 135).

## Patentansprüche

1. Kochgerät, umfassend:
eine Hohlraumeinheit (100) mit einem Garraum (C) darin, einer Seitenwandplatte (110, 130) mit einem Auslassöffnungsabschnitt (111) und einer obere Wandplatte (140) mit einem oberen Heizöffnungsabschnitt (141);
eine Türeinheit (200) auf oder über der Hohlraumeinheit (100), ausgelegt zum Öffnen und Schließen einer Öffnung der Hohlraumeinheit (100);
eine Zirkulationskanaleinheit (600), die mit dem Auslassöffnungsabschnitt (111) verbunden ist, um die aus dem Garraum (C) austretende Luft durch den Auslassöffnungsabschnitt (111) und zurück in den Garraum (C) zu leiten, und
eine obere Heizeinheit (700) auf oder über der oberen Wandplatte (140), **dadurch gekennzeichnet, dass** die Zirkulationskanaleinheit (600) Folgendes umfasst:
einen Zirkulationskanal (610) mit einem Ende, das mit dem Auslassöffnungsabschnitt (111) verbunden ist, und einem anderen Ende, das mit einem Ansaugöffnungsabschnitt (112) in der oder von der Seitenwandplatte (110, 130) verbunden ist, der ausgelegt ist zum Leiten von Luft, die durch den Auslassöffnungsabschnitt (111) abgegeben wird, zum Ansaugöffnungsabschnitt (112); und
einen Kanalöffnungs- und -schließabschnitt (620) im Zirkulationskanal (610), ausgelegt zum Öffnen und Schließen eines internen Strömungswegs des Zirkulationskanals (610),
wobei der Zirkulationskanal (610) eine Auslassöffnung (611) aufweist, die ausgelegt ist zum Ableiten von Luft vom Auslassöffnungsabschnitt (111) aus dem Zirkulationskanal (610), und der Kanalöffnungs- und -schließabschnitt (620) die Auslassöffnung (611) beim Öffnen des internen Strömungswegs des Zirkulationskanals (610) schließt und die Auslassöffnung (611) beim Schließen des internen Strömungswegs des Zirkulationskanals (610) öffnet.

2. Kochgerät nach Anspruch 1, wobei die obere Heizeinheit (700) Folgendes umfasst:
eine obere Heizeinheit (710) über der oberen Wandplatte (140), ausgelegt zum Zuführen von Wärme und/oder Heißluft in den Garraum (C) durch den oberen Heizöffnungsabschnitt (141); und eine obere Heizeinheitabdeckung (720) auf oder über der Wandplatte (140), die ausgelegt ist zum Abdecken der oberen Heizeinheit (710).

3. Kochgerät nach Anspruch 1 oder 2, wobei die obere Heizeinheit (700) ferner Folgendes umfasst:
eine obere Isolierabdeckung (730), die zwischen der oberen Heizeinheit (710) und der oberen Heizeinheitabdeckung (720) angeordnet ist.

4. Kochgerät nach den Ansprüchen 1 bis 3, wobei die obere Heizeinheit (700) ferner Folgendes umfasst:
ein oberes Gebläse (740) in oder unter der oberen Heizeinheitabdeckung (720); und
einen oberen Motor (750), ausgelegt zum Drehen des oberen Gebläses (740).

5. Kochgerät nach den Ansprüchen 1 bis 4, wobei sich einer des Auslassöffnungsabschnitts (111) und des Ansaugöffnungsabschnitts (112) in einem oberen Teil der Seitenwandplatte (110, 130) und der andere des Auslassöffnungsabschnitts (111) und des Ansaugöffnungsabschnitts (112) in einem unteren Teil der Seitenwandplatte (110, 130) befinden.

6. Kochgerät nach den Ansprüchen 1 bis 5, wobei sich einer des Auslassöffnungsabschnittes (111) und des Ansaugöffnungsabschnitts (112) in einem vorderen Teil der Seitenwandplatte (110, 130) und der andere des Auslassöffnungsabschnitts (111) und des Ansaugöffnungsabschnitts (112) in einem hinteren Teil der Seitenwandplatte (110, 130) befinden.

7. Kochgerät nach Anspruch 1, wobei die Seitenwandplatte (110, 130) Sitzvorsprünge (115, 135) aufweist, wobei die obere Heizeinheit (700) ausgelegt ist zum Zuführen von Heißluft in den Garraum (C) durch den oberen Heizöffnungsabschnitt (141), und
wobei das Kochgerät ferner einen Kochbehälter mit einer Gehäuseeinheit (5) mit einem Einlass, durch den Heißluft eintritt, und einer Trägereinheit (30) an der Gehäuseeinheit (5) umfasst, auf der ein oder mehrere Kochobjekte angeordnet sind, wobei der Kochbehälter so ausgelegt ist, dass er auf die Sitzvorsprünge (115, 135) aufgesetzt und/oder von diesen getragen wird.

## Revendications

1. Appareil de cuisson, comprenant:
une unité de cavité (100) présentant une chambre de cuisson (C) dans celle-ci, une plaque de paroi latérale (110, 130) comportant une section de trous de décharge (111), et une plaque de paroi supérieure (140) comportant une section de trous de dispositif de chauffage supérieur (141);
une unité de porte (200) sur ou au-dessus de l'unité de cavité (100), configurée de manière à ouvrir et à fermer une ouverture de l'unité de cavité (100);
une unité de conduit de circulation (600) connecté à la section de trous de décharge (111), configurée de manière à guider l'air déchargé à partir de la chambre de cuisson (C) à travers la section de trous de décharge (111) et de retour vers la chambre de cuisson (C), et
une unité de dispositif de chauffage supérieur (700) sur ou au-dessus de la plaque de paroi supérieure (140),
**caractérisé en ce que** l'unité de conduit de circulation (600) comprend:
un conduit de circulation (610) présentant une première extrémité connectée à la section de trous de décharge (111) et une autre extrémité connectée à une section de trous d'aspiration (112) dans ou de la plaque de paroi latérale (110, 130), configuré de manière à guider l'air déchargé à travers la section de trous de décharge (111) jusqu'à la section de trous d'aspiration (112); et
une section d'ouverture et de fermeture de conduit (620) dans le conduit de circulation (610), configurée de manière à ouvrir et à fermer un chemin d'écoulement interne du conduit de circulation (610),
dans lequel le conduit de circulation (610) comporte une ouverture de décharge (611) configurée de manière à décharger l'air en provenance de la section de trous de décharge (111) hors du conduit de circulation (610), et la section d'ouverture et de fermeture de conduit (620) ferme l'ouverture de décharge (611) lors de l'ouverture du chemin d'écoulement interne du conduit de circulation (610), et ouvre l'ouverture de décharge (611) lors de la fermeture du chemin d'écoulement interne du conduit de circulation (610).

2. Appareil de cuisson selon la revendication 1, dans lequel l'unité de dispositif de chauffage supérieur (700) comprend un dispositif de chauffage supérieur (710) au-dessus de la plaque de paroi supérieure (140), configuré de manière à fournir de la chaleur et/ou de l'air chaud à la chambre de cuisson (C) à travers la section de trous de dispositif de chauffage supérieur (141); et un capot de dispositif de chauffage supérieur (720) sur ou au-dessus de la plaque de paroi supérieure (140) configuré de manière à couvrir le dispositif de chauffage supérieur (710).

3. Appareil de cuisson selon la revendication 1 ou 2, dans lequel l'unité de dispositif de chauffage supérieur (700) comprend en outre un couvercle d'isolation supérieur (730) disposé entre le dispositif de chauffage supérieur (710) et le capot de dispositif de chauffage supérieur (720).

4. Appareil de cuisson selon les revendications 1 à 3, dans lequel l'unité de dispositif de chauffage supérieur (700) comprend en outre:
un ventilateur supérieur (740) dans le ou en dessous du capot de dispositif de chauffage supérieur (720); et
un moteur supérieur (750) configurée de manière à faire tourner le ventilateur supérieur (740).

5. Appareil de cuisson selon la revendications 1 à 4, dans lequel une parmi la section de trous de décharge (111) et la section de trous d'aspiration (112) est située dans une partie supérieure de la plaque de paroi latérale (110, 130), et l'autre parmi la section de trous de décharge (111) et la section de trous d'aspiration (112) est située dans une partie inférieure de la plaque de paroi latérale (110, 130).

6. Appareil de cuisson selon la revendications 1 à 5, dans lequel une parmi la section de trous de décharge (111) et la section de trous d'aspiration (112) est située dans une partie avant de la plaque de paroi latérale (110, 130), et l'autre parmi la section de trous de décharge (111) et la section de trous d'aspiration (112) est située dans une partie arrière de la plaque de paroi latérale (110, 130).

7. Appareil de cuisson selon la revendications 1, dans lequel la plaque de paroi latérale (110, 130) comporte des saillies d'appui (115, 135), dans lequel l'unité de dispositif de chauffage supérieur (700) est configurée de manière à fournir de l'air chaud à la chambre de cuisson (C) à travers la section de trous de dispositif de chauffage supérieur (141), et dans lequel l'appareil de cuisson comprend en outre un récipient de cuisson comprenant une unité de boîtier (5) pourvue d'une entrée à travers laquelle de l'air chaud entre, et d'une unité de support (30) sur l'unité de boîtier (5) et sur laquelle un ou plusieurs ustensile (s) de cuisson est (sont) placé(s), dans lequel le récipient de cuisson est configuré de manière à être placé sur et/ou supporté par les saillies d'appui (115, 135).
